# EUROPÄISCHE PATENTSCHRIFT

(11) **EP 3 038 952 B1**
(45) Veröffentlichungstag und Bekanntmachung des Hinweises auf die Patenterteilung: **28.02.2018**
(21) Anmeldenummer: 14758809.9
(22) Anmeldetag: 20.08.2014
(51) Int. Cl.: B65G 17/34, B65G 47/52, B65G 47/96

(54) **SPURGEFÜHRTES TRANSPORTFAHRZEUG UND SORTIERANLAGE ZUM SORTIEREN VON GÜTERN**
RAIL-BORNE TRANSPORT VEHICLE AND SORTING SYSTEM FOR SORTING GOODS
VÉHICULE DE TRANSPORT GUIDÉ SUR VOIE ET INSTALLATION DE TRI POUR TRIER DES MARCHANDISES

(30) Priorität: 30.08.2013 DE 102013217376
(43) Veröffentlichungstag der Anmeldung: 06.07.2016
(73) Patentinhaber: Siemens Aktiengesellschaft, 80333 München (DE)
(72) Erfinder: BERDELLE-HILGE, Peter, 78464 Konstanz (DE)
(74) Vertreter: Maier, Daniel Oliver
(86) Internationale Anmeldenummer: PCT/EP2014/067708
(87) Internationale Veröffentlichungsnummer: WO 2015/028361

(56) Entgegenhaltungen:
- US-A1- 2004 016 679
- US-A1- 2013 084 150

## Beschreibung

Die Erfindung betrifft ein spurgeführtes Transportfahrzeug zum Transportieren von Gütern nach dem Oberbegriff des Anspruchs 1. Ferner betrifft die Erfindung eine Sortieranlage zum Sortieren von Gütern mit einer in einer Transportrichtung verlaufenden Transportstrecke, mehreren spurgebundenen Transportfahrzeugen, die an der Transportstrecke verfahrbar angeordnet sind, einem Antriebsmittel zum Antreiben wenigstens eines Transportfahrzeugs auf der Transportstrecke, einer Beladestation, an der die Güter auf die Transportfahrzeuge beladbar sind, und mit einer Entladestation, an der die Güter von den Transportfahrzeugen entladbar sind.

Transportfahrzeuge und Sortieranlagen sind beispielsweise aus der EP 0 927 689 B1 bekannt. Der Durchsatz von Sortieranlagen, die Güter, wie Pakete oder Gepäckstücke, sortieren, ist ein entscheidender Parameter für die resultierende Komplexität des gesamten Sortiersystems. Um den heutzutage erhöhten Aufkommen von Paketen bzw. Gepäckstücken zu bewältigen, ist ein höherer Durchsatz von Gütern wünschenswert. Eine Durchsatzerhöhung ist generell durch eine dichtere Belegung der Transportfahrzeuge mit zu sortierenden Gütern erreichbar. Dies kann beispielsweise durch eine dichtere Belegung der Güter in Transportrichtung oder durch das Aufnehmen mehrerer Güter quer zur Transportrichtung, wie in der EP 0 927 689 B1 beschrieben, erfolgen. Das Dokument US 2013084150 offenbart ein spurgeführtes Transportfahrzeug sowie eine Sortieranlage nach dem Oberbegriff der Ansprüche 1 und 8. Der Erfindung liegt die Aufgabe zugrunde, ein Transportfahrzeug und eine Sortieranlage bereitzustellen, mit der ein erhöhter Durchsatz von zu sortierenden Gütern erreicht werden kann.

Die Aufgabe wird durch ein spurgeführtes Transportfahrzeug nach Anspruch 1 gelöst. Für die oben genannte Sortieranlage wird die Aufgabe dadurch gelöst, dass die erfindungsgemäßen Transportfahrzeuge verwendet werden.
Die erfindungsgemäße Lösung hat den Vorteil, dass mehrere Güter übereinander in den Lagerabschnitten gespeichert werden können und dadurch der Durchsatz der Sortieranlage erhöht wird. Durch die regalartige Anordnung der Lagerabschnitte übereinander bleibt die Grundfläche des erfindungsgemäßen Transportfahrzeugs gegenüber Anlagen des Standes der Technik gleich, so dass sich die Erfindung auch bei älteren Sortieranlagen nachrüsten lässt. Je nach gewünschtem Durchsatz können beispielsweise zwei oder drei Lagerabschnitte übereinander angeordnet sein. Durch den hohen Durchsatz der erfindungsgemäßen Lösung ergeben sich geringe durchsatzbezogene Kosten pro Meter Sortieranlage. Das große Durchsatzpotential der erfindungsgemäßen Lösung kann zugunsten einer geringeren Anzahl von Transportfahrzeugen pro Sortieranlage genutzt werden. Alternativ kann der Durchsatz der Sortieranlage auch kleiner als der maximal mögliche Durchsatz gewählt werden, so dass durch eine geringere Transportgeschwindigkeit die Güter einfacher be- und entladbar sind und die Belastung und dadurch der Verschleiß der Sortieranlage geringer ist.
Die erfindungsgemäße Lösung kann durch verschiedene und voneinander unabhängige vorteilhafte Weiterbildungen ergänzt werden.

So können die Be- und Entlademittel jeweils ein Querfördermittel aufweisen, mit dem die Güter quer zur Transportrichtung bewegbar sind. Dies hat den Vorteil, dass die Güter sowohl effektiv be- und entladen werden können und auch besonders gut in dem Transportfahrzeug bewegt und positioniert werden können. Es können beispielsweise Querförderbänder verwendet werden, wie sie aus der EP 0 927 689 B1 bekannt sind.

Um einen schnellen Transport der Güter zwischen den Lagerabschnitten zu ermöglichen, kann auch die Hubeinheit ein Be- und Entlademittel aufweisen. Zur Kapazitätssteigerung kann auch auf der Hubeinheit ein Gut gelagert und transportiert werden.

In einer vorteilhaften Ausgestaltung kann das Transportfahrzeug ein Übergabemittel aufweisen, das unterhalb der Hubeinheit angeordnet ist. Das Übergabemittel überdeckt sich mit der Hubeinheit. Dies hat den Vorteil, dass Güter durch das Übergabemittel aus dem untersten Lagerabschnitt ohne die Hubeinheit be- und entladen werden können, wenn die Hubeinheit in einer den oberen Lagerabschnitten zugeordneten Hubstellung ist. Hierdurch ist ein schnelles Be- und Entladen unabhängig von der Hubeinheit möglich, so dass der Durchsatz weiter erhöht werden kann. Dabei ist die Breite des unteren Lagerabschnitts plus der Breite des Übergabemittels etwa gleich mit der Breite der oberen Lagerabschnitte plus der Breite der Hubeinheit. Das Übergabemittel kann beispielsweise mit dem untersten Lagerabschnitt in Querrichtung zur Transportrichtung fluchtend angeordnet sein. Alternativ kann es auch nach unten federnd sein, so dass es die Hubeinheit in unterster Stellung wegdrücken kann. In jedem Fall ist es so angeordnet, dass Güter darüber be- und entladen werden können, wenn die Hubeinheit in den oberen Hubstellungen ist.

Um das beidseitige Be- und Entladen von Gütern zu ermöglichen, kann das Transportfahrzeug zwei Hubeinheiten und zwei Übergabemittel aufweisen. Dabei sind die Hubeinheiten und die Übergabemittel in Transportrichtung zu beiden Seiten des Transportfahrzeugs angeordnet.

In einer vorteilhaften Ausgestaltung umfasst das Transportfahrzeug einen Antrieb, der mit wenigstens einem der Be- und Entlademittel verbunden ist, und eine Kupplung, die zwischen dem Antrieb und dem Be- und Entlademittel angeordnet ist und durch welche die Verbindung zwischen Antrieb und Be- und Entlademittel wiederholt lösbar ist. Dies hat den Vorteil, dass der Antrieb jeweils unterschiedlichen Be- und Entlademittel zugeschaltet werden kann und so lediglich ein Antrieb für mehrere Be- und Entlademittel nötig ist. Hierdurch können Herstellungskosten reduziert und die Masse des Transportfahrzeugs verringert werden.

Ferner kann das Transportfahrzeug ein schaltbares Anschlagelement aufweisen, das in einer Anschlagstellung die Bewegung eines Gutes auf einen der Be- und Entlademittel begrenzt. So kann ein genaues Positionieren der Güter erreicht werden und ein auftretender Verzögerungsweg des Gutes auf einem Be- und Entlademittel verringert bzw. ausgeschlossen werden.

In einer vorteilhaften Ausgestaltung der erfindungsgemäßen Sortieranlage kann diese mehrere Beladestationen aufweisen. Dies hat den Vorteil, dass jedes Transportfahrzeug schnell bis zur maximalen Aufnahmekapazität mit Gütern beladen werden kann und dennoch nur ein Gut pro Beladestation aufgenommen werden muss.

Um den Durchsatz der Sortieranlage weiter zu erhöhen, kann die Sortieranlage eine Steuerung aufweisen, welche die Belegung der Transportfahrzeuge mit Gütern steuert und die das erste zu entladende Gut jedes Transportfahrzeugs auf dem Übergabemittel oder auf der Hubeinheit anordnet. So ist gewährleistet, dass das erste zu entladende Gut schnell und einfach entladen werden kann.

Die Erfindung wird im Folgenden anhand der beispielhaften Ausführungsformen in den Figuren erläutert.

Es zeigen:
- Figur 1: eine schematische Darstellung einer ersten beispielhaften Ausführungsform des erfindungsgemäßen Transportfahrzeugs;
- Figur 2: eine schematische Darstellung des erfindungsgemäßen Transportfahrzeugs aus Figur 1 mit einer anderen Gutbeladung;
- Figur 3: eine schematische Darstellung einer weiteren beispielhaften Ausführungsform eines erfindungsgemäßen Transportfahrzeugs;
- Figur 4: eine schematische Darstellung der Ausführungsform in Figur 3 mit einer anderen Gutbeladung;
- Figur 5: eine schematische Draufsicht einer beispielhaften Ausführungsform einer erfindungsgemäßen Sortieranlage.

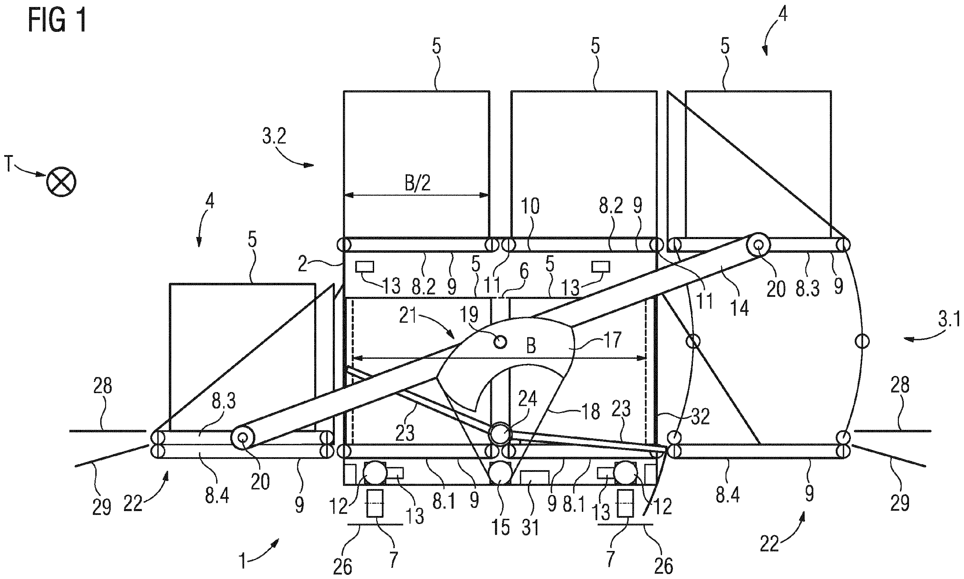

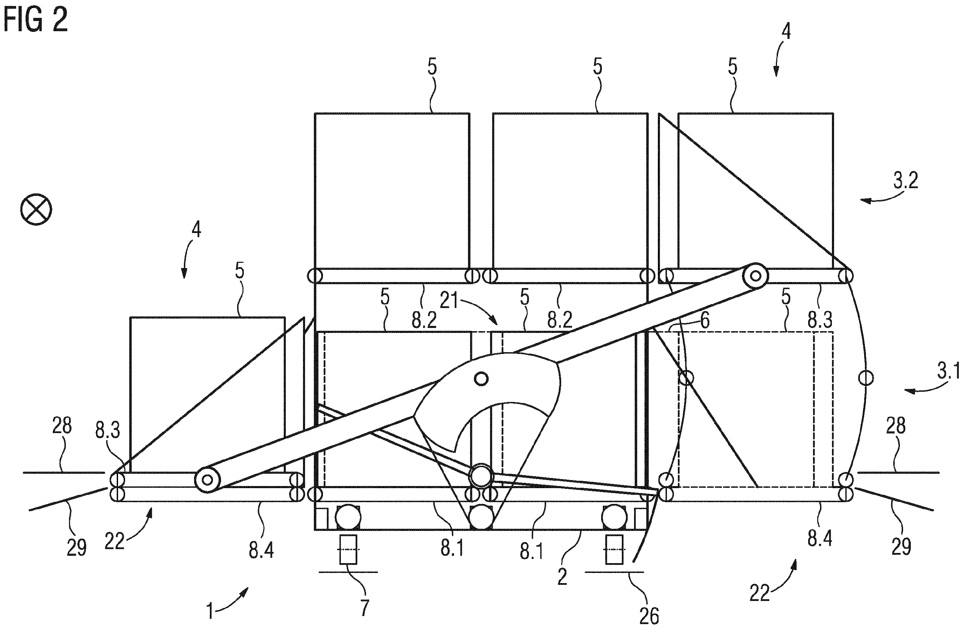

Zunächst wird die Erfindung anhand einer ersten beispielhaften Ausführungsform eines erfindungsgemäßen Transportfahrzeugs in den Figuren 1 und 2 erläutert.

Das Transportfahrzeug 1 der Figuren 1 und 2 umfasst einen Rahmen 2, zwei übereinander angeordnete Lagerabschnitte 3 und eine Hubeinheit 4. Das Transportfahrzeug 1 ist zum Transportieren und Aufnehmen von Gütern 5, 6 ausgebildet wie im Folgenden genauer beschrieben wird.

Der Rahmen 2 besteht aus einzelnen Streben 32, die jeweils rechtwinklig so aneinander befestigt sind, dass sie die Kanten eines Quaders ausbilden. Die Flächen des quaderförmigen Rahmens 2 sind zumindest quer zur Transportrichtung offen. An dem Rahmen 2 ist unten, bodenseitig ein Fahrwerk 7 befestigt, das hier aus zwei Rädern besteht.

An dem Rahmen 2 sind mehrere Be- und Entlademittel 8 angeordnet, welche die Lagerabschnitte 3 ausbilden. Die Be- und Entlademittel 8 sind bei der Ausführungsform der Figuren 1 und 2 als Querfördermittel 9, sogenannte Querförderbänder oder Cross Belts, ausgebildet. Die Querfördermittel 9 umfassen jeweils ein Endlosförderband 10 und zwei Umlenkrollen 11, um die das Endlosförderband 10 verläuft und von denen es angetrieben wird. Die Be- und Entlademittel 8.1 des unteren Lagerabschnitts 3.1 sind im Wesentlichen horizontal und horizontal fluchtend zueinander angeordnet. Die Be- und Entlademittel 8.2 des oberen Lagerabschnitts 3.2 sind ebenfalls horizontal und fluchtend zueinander angeordnet. Dadurch sind die Be- und Entlademittel 8.1, 8.2 der beiden Lagerabschnitte 3.1, 3.2 parallel zueinander ausgerichtet. In Transportrichtung T sind die Be- und Entlademittel 8 alle mit gleichen Abmessungen ausgestaltet, die größer als die maximale Gutabmessung ist.

Ferner weist das Transportfahrzeug 1 am Rahmen 2 befestigte Antriebe 12 auf, beispielsweise Elektromotoren mit geeignetem Getriebe. Die Be- und Entlademittel 8 umfassen jeweils eine Kupplung 13, z. B. eine Reibscheibenkupplung, über die die Querfördermittel 9 mit jeweils einem Antrieb 12 verbunden sind. Bei der Ausgestaltung in Figur 1 ist ein Antrieb 12 für alle übereinander liegenden Querfördermittel 9 auf der gleichen Seite vorgesehen. So sind mehrere Querfördermittel 9 einem Antrieb 12 zugeordnet. Ausgenommen die Querfördermittel 9 der Hubeinheiten 4, die einen separaten Antrieb haben, der beispielsweise in einer der Rollen 11 angeordnet ist.

Die Hubeinheit 4 ist ebenfalls mit dem Rahmen 2 verbunden und umfasst bei der Ausführungsform in Figur 1 und 2 zwei Be- und Entlademittel 8 und eine Wippeneinheit 14 als Hubeinheitenantrieb 21.

Der Hubeinheitenantrieb 21 weist einen Antriebsmotor 15, einen Wippenbalken 16, eine Auslenkscheibe 17 und einen Riemen 18 auf. Der Wippenbalken 16 ist in einem Drehpunkt 19 mit dem Rahmen 2 drehbar verbunden. Die Strebe des Rahmens 2, die mit dem Wippenbalken 16 im Drehpunkt 19 verbunden ist, ist der Übersichtlichkeit halber weggelassen. An den Enden des Wippenbalkens 16 sind die Be- und Entlademittel 8 jeweils um eine Schwenkachse 20 drehbar angeordnet. Der Wippenbalken 16 ist jeweils so mit dem Be- und Entlademittel 8 verbunden, dass die Be- und Entlademittel 8.3 immer waagerecht ausgerichtet sind. Dies kann beispielsweise durch ein entsprechendes Getriebe (nicht dargestellt) erreicht werden, z. B. ein Riemengetriebe. Die Ausgleichscheibe 17 ist fest mit dem Wippenbalken 16 verbunden. Der Riemen 18 verläuft um die Ausgleichscheibe 17 und eine Antriebsscheibe des Antriebsmotors 15.

Die beiden Hubeinheiten 4 weisen jeweils eine obere und eine untere Hubstellung auf. Bei der Darstellung in Figur 1 befindet sich die rechte Hubeinheit 4 in ihrer oberen Hubstellung und die linke Hubeinheit 4 in ihrer unteren Hubstellung. In der oberen Hubstellung fluchtet das Be- und Entlademittel 8 der Hubeinheit 4 mit den Be- und Entlademitteln 8.2 des oberen Lagerabschnitts 3.2 in horizontaler Richtung. In der unteren Hubstellung fluchtet das Be- und Entlademittel 8 der Hubeinheit 4 mit den Be- und Entlademitteln 8.1 des unteren Lagerabschnitts 3.1 in horizontaler Richtung. Da die Hubeinheiten 4 bei der beispielhaften Ausführungsform der Figuren 1 und 2 miteinander über den gemeinsamen als Wippe ausgebildeten Hubeinheitenantrieb 21 gekoppelt sind, befindet sich die rechte Hubeinheit 4 in der oberen Hubstellung, wenn sich die linke Hubeinheit 4 in der unteren Hubstellung befindet und umgekehrt. Durch die fluchtende Ausrichtung können in den Hubstellungen Güter zwischen der Hubeinheit 4 und den Lagerabschnitten 3 verfahren werden. Hubeinheiten 4 und Lagerabschnitte 3 befinden sich dabei in der gleichen Transportebene.

Das erfindungsgemäße Transportfahrzeug 1 der Figuren 1 und 2 umfasst weiterhin zwei Übergabemittel 22, die jeweils seitlich vom Rahmen 2 auskragen. Die Übergabemittel 22 weisen jeweils ein Be- und Entlademittel 8.4 auf, die ebenfalls als Querfördermittel 9 ausgebildet sind. Die Be- und Entlademittel 8.4 der Übergabemittel 22 sind waagerecht und fluchtend mit den Be- und Entlademitteln 8.1 des unteren Lagerabschnitts 3.1 - in der gleichen Transportebene - angeordnet. Die Breite des Be- und Entlademittels 8.4 der Übergabemittel 22 ist im Wesentlichen gleich mit der Breite der Be- und Entlademittel 8.3 der Hubeinheiten 4. Dadurch überdeckt die Hubeinheit 4 in ihrer unteren Hubstellung von oben gesehen das Übergabemittel 22 im Wesentlichen komplett, wie in Figur 1 bei der linken Hubeinheit 4 ersichtlich. Die Be- und Entlademittel 8.1 und 8.4 können auch als ein einziges Be- und Entlademittel ausgebildet sein.

Das Transportfahrzeug 1 in der Ausführungsform der Figuren 1 und 2 umfasst weiterhin zwei Anschlagelemente 23. Die Anschlagelemente 23 sind beide mit einem Stellantrieb 24 verbunden und jeweils von einer Anschlagstellung in eine Neutralstellung bewegbar.

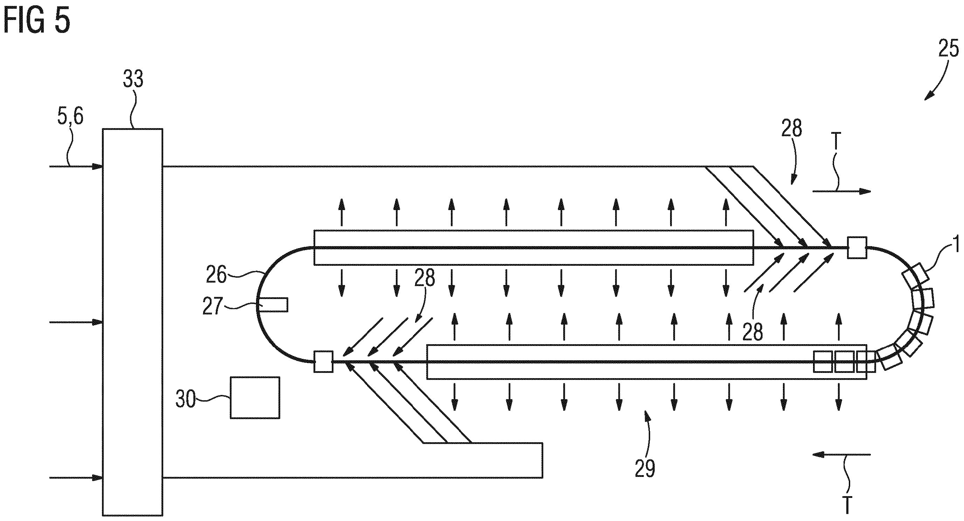

Im Folgenden wird eine erfindungsgemäße Sortieranlage 25 mit Bezug auf die beispielhafte Ausführungsform in Figur 5 beschrieben. Die Sortieranlage 25 umfasst eine in der Transportrichtung T verlaufende Transportstrecke 26, mehrere spurgebundene erfindungsgemäße Transportfahrzeuge 1, die auf der Transportstrecke angeordnet sind, eine Steuerung 30, einen Antrieb 27 und mehrere Be- und Entladestationen 28, 29. Der Antrieb 27 weist beispielsweise ein angetriebenes Antriebsseil auf, das mit jedem Transportfahrzeug 1 verbunden ist. Optional kann die Sortieranlage 25 auch eine Vorsortierstation 33 aufweisen, an der die Güter 5,6 vorsortiert werden und vorsortiert an die Beladestationen weitergegeben werden.

Im Folgenden wird die Funktion der erfindungsgemäßen Sortieranlage 25 beschrieben.

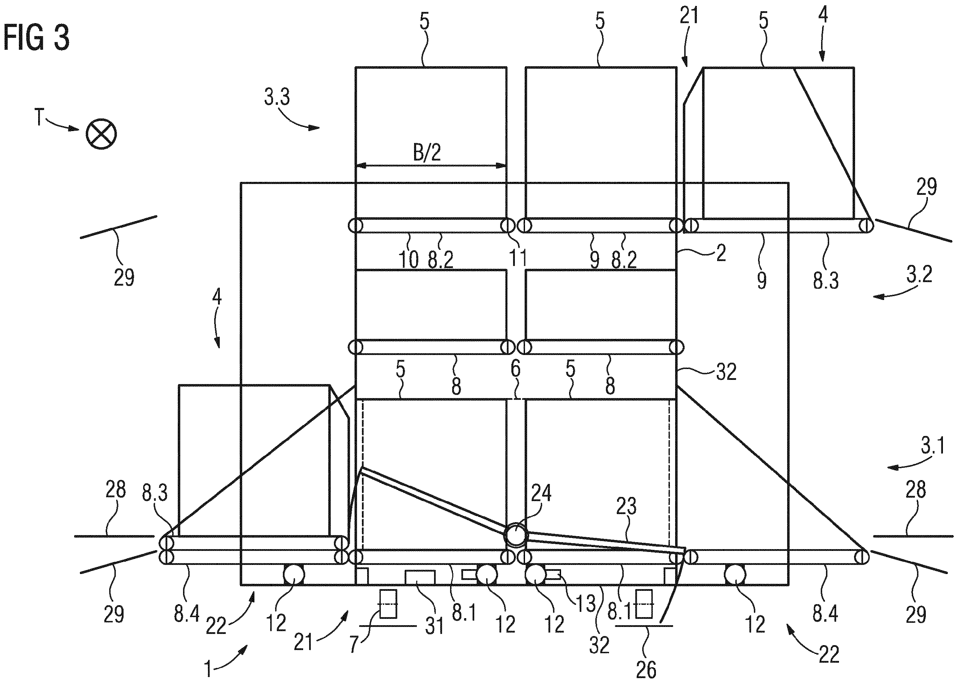

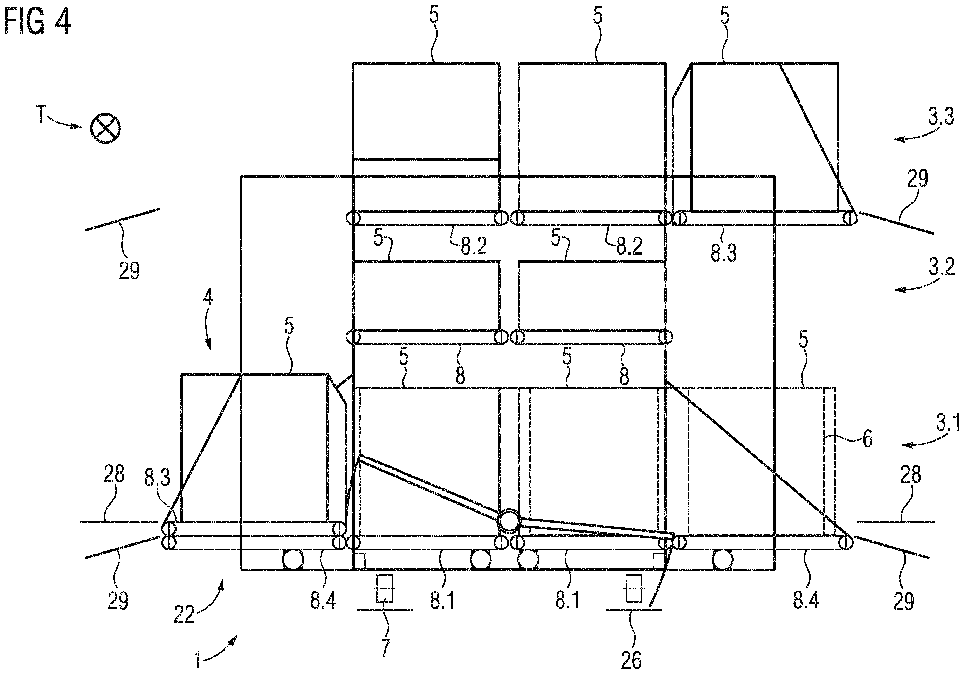

Die zu sortierenden Güter 5, 6, die beispielsweise Pakete oder Gepäckstücke sein können, gelangen zur Sortieranlage und werden an mehreren Beladestationen 28 auf die Transportfahrzeuge 1 geladen. Die Transportfahrzeuge 1 stehen mit ihrem Fahrwerk 7 auf der Transportstrecke 26 und werden von dem Antrieb 27 auf der Transportstrecke 26 in der Transportrichtung T bewegt. Eine Vielzahl von Transportfahrzeugen 1 ist auf der gesamten Transportstrecke 26 hintereinander angeordnet. Zur Vereinfachung sind die Transportfahrzeuge 1 nur auf einen Teil der Transportstrecke 26 schematisch dargestellt. Der Antrieb 27 treibt alle Transportfahrzeuge 1 im Betrieb der Sortieranlage 25 gleichzeitig und kontinuierlich mit gleicher Transportgeschwindigkeit an. Die aufgeladenen Güter 5, 6 auf den Transportfahrzeugen 1 werden zu den Entladestationen 29 transportiert. An den jeweils geeigneten Entladestationen 29 werden die Güter 5, 6 von den Transportfahrzeugen 1 entladen. Die Entladestationen 29 können auf den unterschiedlichen Transportebenen der Transportfahrzeuge 1 angeordnet sein, wie es in den Figuren 3, 4 schematisch dargestellt ist.

Im Folgenden wird die Funktion des erfindungsgemäßen Transportfahrzeugs 1 anhand der beispielhaften Ausführungsform der Figuren 1 und 2 erläutert.

An den Beladestationen 28 werden die Güter 5, 6 auf das Transportfahrzeug 1 bewegt. Die Beladestationen 28 sind beispielsweise Förderbänder (nicht dargestellt), auf denen die Güter 5, 6 auf die Transportfahrzeuge 1 eingeschossen werden. Wenn ein Gut 5, 6 auf das Transportfahrzeug eingeschossen wird, gelangt es zunächst auf die Hubeinheit 4 oder ein Übergabemittel 22, deren Be- und Entlademittel 8 das Gut auf das Transportfahrzeug 1 fördern. Jedes Transportfahrzeug 1 weist eine Transportfahrzeugsteuerung 31 auf, welche alle Komponenten inklusive der Hubeinheiten 4, der Übergabemittel 22 und der Be- und Entlademittel 8 der Lagerabschnitte 3 steuert.

Je nachdem, ob ein Gut 5, 6 auf der linken oder der rechten Seite auf das Transportfahrzeug 1 einschießt, wird ein Anschlagelement 23 in die Anschlagstellung gebracht. Der Stellantrieb 24 der Anschlagelemente 23 wird ebenfalls von der Transportfahrzeugsteuerung 31 gesteuert. Wenn auf der linken Seite ein Gut 5 einschießt, wie in Figur 1 dargestellt, ist das linke Anschlagelement 23 in Anschlagstellung gebracht. Durch das Anschlagelement 23 in seiner Anschlagstellung wird verhindert, dass ein Gut 5, 6 beim Fördern nicht rechtzeitig stoppt und über die Hubeinheit 4 oder das Übergabemittel 22 in Richtung Lagerabschnitte 3 hinausfährt. Dies wird durch das Anschlagelement 23 verhindert, das das Gut stoppt.

Anhand der Belegung des Transportfahrzeugs und/oder gemäß einer Guteinplanung verfährt die Transportfahrzeugsteuerung 31 das neu aufgeladene Gut 5 in eine vorbestimmte Lagerposition. Diese Lagerposition des Gutes 5, 6 kann im unteren Lagerabschnitt 3.1, im oberen Lagerabschnitt 3.2, auf der Hubeinheit 4 oder auf dem Übergabemittel 22 sein. Über den Hubeinheitenantrieb 21 und die angetriebenen Be- und Entlademittel 8 wird jedes Gut 5, 6 in seine vorbestimmte Lagerposition auf dem Transportfahrzeug 1 verbracht.

Auf dem erfindungsgemäßen Transportfahrzeug 1 können sowohl große als auch kleine Güter transportiert werden. Die Breite des Rahmens 2 quer zur Transportrichtung T entspricht der maximalen Gutbreite B, die transportiert werden kann. Das Gut 6, das mit einer Punktlinie dargestellt ist, hat genau diese maximalen Abmessungen B. Das Gut 6 belegt beide Be- und Entlademittel 8.1 des unteren Lagerabschnitts 3.1. Ein Gut 6 mit maximalen Abmessungen kann mit dem erfindungsgemäßen Transportfahrzeug 1 im unteren Lagerabschnitt 3.1 aufgenommen werden. Weiterhin können auch zwei Güter 6 mit Maximalabmessungen im unteren Lagerabschnitt 3.1 aufgenommen werden, wenn sie jeweils seitlich zum Übergabemittel 22 oder zur Hubeinheit 4 hinausragen, wie in Figur 2 dargestellt. Von Güter 5, die lediglich die halbe Maximalbreite B/2 oder weniger aufweisen, können deutlich mehr aufgenommen werden. So können beispielsweise bei der beispielhaften Ausführungsform in Figur 1 und 2 sieben Güter 5 aufgenommen werden.

Figur 3 und Figur 4 zeigen eine weitere beispielhafte Ausführungsform des erfindungsgemäßen Transportfahrzeugs 1. Der Einfachheit halber wird lediglich auf die Unterschiede zu der Ausführungsform der Figuren 1 und 2 eingegangen.

Das Transportfahrzeug 1 der Figuren 3 und 4 umfasst einen weiteren, dritten Lagerabschnitt 3.3. Der dritte Lagerabschnitt 3.3 ist konstruktiv gleich wie die darunter liegenden Lagerabschnitte 3.1, 3.2 ausgebildet.

Im Gegensatz zu der Ausführungsform der Figuren 1 und 2 umfasst die Ausführungsform der Figuren 3 und 4 zwei voneinander getrennte, unabhängige Hubeinheitenantriebe 21. Diese sind nicht als Wippe, wie in Figur 1 und 2, ausgebildet, sondern als eine Lifteinheit, welche die Hubeinheiten 4 linear in vertikaler Richtung verfährt. Die Hubeinheiten 4 in Fig. 3 und 4 können separat voneinander verfahren werden.

Bei dem erfindungsgemäßen Transportfahrzeug 1 werden die Lagerabschnitte 3, in denen die Güter 5, 6 gelagert bzw. gespeichert werden können, über die Hubeinheiten 4 von beiden Seiten beladen. Bei der Ausführungsform der Figuren 3 und 4 ist dieser Beladevorgang von den Hubeinheiten nach innen in die Lagerabschnitte 3 voneinander unabhängig. Zur Erhöhung der Transportkapazität können die Hubeinheiten 4 am Ende der Beladung, wenn die Lagerabschnitte 3 bereits gefüllt sind, ebenfalls jeweils ein weiteres Gut 5 aufnehmen. Um ohne Durchsatzverlust eine beliebige Entladefolge der Güter 5, 6 zu ermöglichen, kann für den Beladevorgang auf jeder Seite des Transportfahrzeugs 1 folgendes durchgeführt werden.

Das erste zu entladende Gut 5, 6 wird identifiziert und es wird entweder auf dem untersten Lagerabschnitt 3.1, einem der Übergabemittel 22 oder auf einer der Hubeinheiten 4 eingelagert. Dadurch ist sichergestellt, dass das erste zu entladende Gut 5, 6 ohne Umgruppierung der übrigen Güter auf dem Transportfahrzeug 1 entladen werden kann und dass nach dem ersten Entladevorgang immer zumindest ein Zwischenspeicherplatz pro Seite zum Umgruppieren auf dem Transportfahrzeug 1 vorhanden ist. Durch die Übergabemittel 22, welche die Transportebene des untersten Lagerabschnitts 3.1 jeweils soweit nach außen (quer zur Transportrichtung T) verlängern, kann vom unteren Lagerabschnitt 3.1 direkt, ohne zu Hilfenahme der Hubeinheit 4, entladen werden. Güter 6, die länger als die halbe maximale Gutlänge sind, werden auf den untersten Lagerabschnitt 3.1 geladen und dort transportiert.

Wie in den Figuren 3,4 dargestellt, können die Be- und Entladestationen 28, 29 auch auf Höhe des obersten Lagerabschnitts 3.3 angeordnet sein. In diesem Fall können die Güter 5 vorteilhafterweise auch direkt von den Hubeinheiten 4 in der obersten Hubstellung be- und entladen werden.

## Patentansprüche

1. Spurgeführtes Transportfahrzeug (1) zum Transportieren von Gütern (5, 6) entlang einer in eine Transportrichtung (T) verlaufenden Transportstrecke (26), mit mehreren Be- und Entlademitteln (8) zum Be- und Entladen der Güter (5, 6) und mehreren Lagerabschnitten (3), die übereinander positioniert sind und in denen die Be- und Entlademittel (8) angeordnet sind, **gekennzeichnet durch** am mindestens eine Hubeinheit (4), die mehrere den Lagerabschnitten (3) jeweils zugeordnete Hubstellungen aufweist und **durch** die ein Gut (5, 6) zwischen den Lagerabschnitten (3) hin und her beförderbar ist.

2. Spurgeführtes Transportfahrzeug (1) nach Anspruch 1,
**dadurch gekennzeichnet, dass**
die Be- und Entlademittel (8) jeweils ein Querfördermittel (3) aufweisen, mit dem die Güter (5, 6) quer zur Transportrichtung (T) bewegbar sind.

3. Spurgeführtes Transportfahrzeug (1) nach Anspruch 1 oder 2,
**dadurch gekennzeichnet, dass**
die Hubeinheit (4) ein Be- und Entlademittel (8) aufweist.

4. Spurgeführtes Transportfahrzeug (1) nach einem der oben genannten Ansprüche,
**gekennzeichnet durch**
ein Übergabemittel (22), das unterhalb der Hubeinheit (4) angeordnet ist.

5. Spurgeführtes Transportfahrzeug (1) nach einem der oben genannten Ansprüche,
**dadurch gekennzeichnet, dass**
das Transportfahrzeug (1) zwei Hubeinheiten (4) und zwei Übergabemittel (22) aufweist.

6. Spurgeführtes Transportfahrzeug (1) nach einem der oben genannten Ansprüche, mit einen Antrieb (12), der mit wenigstens einem der Be- und Entlademittel (8) verbunden ist,
g**ekennzeichnet durch**
eine Kupplung (13), die zwischen dem Antrieb (12) und dem Be- und Entlademittel (8) angeordnet ist und **durch** welche die Verbindung zwischen Antrieb (12) und Be- und Entlademittel (8) wiederholt lösbar ist.

7. Spurgeführtes Transportfahrzeug (1) nach einem der oben genannten Ansprüche,
**gekennzeichnet durch**
ein schaltbares Anschlagelement (23), das in einer Anschlagstellung die Bewegung eines Gutes (5) auf einem der Be- und Entlademittel (8) begrenzt.

8. Sortieranlage (25) zum Sortieren von Gütern (5, 6)
mit einer in einer Transportrichtung (T) verlaufenden Transportstrecke (26),
mehreren spurgebundenen Transportfahrzeugen (1), die an der Transportstrecke (26) verfahrbar angeordnet sind, einem Antriebsmittel (27) zum Antreiben wenigstens eines Transportfahrzeugs (1) auf der Transportstecke (26), einer Beladestation (28), an der die Güter (5, 6) auf die Transportfahrzeuge (1) beladbar sind,
und einer Entladestation (29), an der die Güter(5, 6) von den Transportfahrzeugen (1) entladbar sind,
**dadurch gekennzeichnet, dass**
die spurgeführten Transportfahrzeuge (1) nach einem der zuvor genannten Ansprüche ausgebildet sind.

9. Sortieranlage (25) nach Anspruch 8,
**gekennzeichnet durch**
eine Steuerung (30, 31), welche die Belegung der Transportfahrzeuge (1) mit Gütern (5, 6) steuert und die das erste zu entladende Gut (5, 6) jedes Transportfahrzeugs (1) auf dem Übergabemittel (22) oder auf der Hubeinheit (6) anordnet.

## Claims

1. Rail-borne transport vehicle (1) for transporting goods (5, 6) along a transport path (26) which runs in one transport direction (T),
having a number of loading and unloading means (8) for loading and unloading goods (5, 6) and
a number of bearing segments (3), which are positioned one above the other and in which the loading and unloading means (8) are arranged,
**characterised by**
at least one lifting unit (4), which has a number of lifting positions assigned in each case to the bearing segments (3) and by means of a which a goods item (5, 6) can be conveyed to and fro between the bearing segments (3).

2. Rail-borne transport vehicle (1) according to claim 1,
**characterised in that**
the loading and unloading means (8) each have a cross-conveying means (3), with which the goods (5, 6) can be moved at right angles to the transport direction (T).

3. Rail-borne transport vehicle (1) according to claim 1 or 2,
**characterised in that**
the lifting unit (4) has a loading and unloading means (8).

4. Rail-borne transport vehicle (1) according to one of the afore-cited claims,
**characterised by**
a transfer means (22), which is arranged below the lifting unit (4).

5. Rail-borne transport vehicle (1) according to one of the afore-cited claims,
**characterised in that**
the transport vehicle (1) has two lifting units (4) and two transfer means (22).

6. Rail-borne transport vehicle (1) according to one of the afore-cited claims, with a drive (12), which is connected to at least one of the loading and unloading means (8),
**characterised by**
a coupling (13), which is arranged between the drive (12) and the loading and unloading means (8) and by means of which the connection between the drive (12) and loading and unloading means (8) can be detached repeatedly.

7. Rail-borne transport vehicle (1) according to one of the afore-cited claims,
**characterised by**
a switchable stop element (23), which, in one stop position, restricts the movement of a goods item (5) on one of the loading and unloading means (8).

8. Sorting system (25) for sorting goods (5, 6) with a transport path (26) which runs in one transport direction (T), a number of rail-borne transport vehicles (1) which are arranged so as to be moveable on the transport path (26), a drive means (27) for driving at least one transport vehicle (1) on the transport path (26), a loading station (28), on which the goods (5, 6) can be loaded onto the transport vehicle (1),
and an unloading station (29), on which the goods (5, 6) can be unloaded from the transport vehicles (1),
**characterised in that**
the rail-borne transport vehicles (1) are embodied according to one of the previously cited claims.

9. Sorting system (25) according to claim 8,
**characterised by**
a controller (30, 31) which controls the occupancy of the transport vehicles (1) with goods (5, 6) and which arranges the first goods item (5, 6) to be unloaded from each transport vehicle on the transfer means (22) or on the lifting unit (6).

## Revendications

1. Véhicule de transport guidé sur voie (1) destiné au transport de marchandises (5, 6) le long d'une voie de transport (26) s'étendant dans une direction de transport (T),
avec plusieurs moyens de chargement et de déchargement (8) destinés au chargement et au déchargement des marchandises (5, 6) et
plusieurs sections de stockage (3), qui sont positionnées les unes au-dessus des autres et dans lesquelles sont agencés les moyens de chargement et de déchargement (8),
**caractérisé par** au moins une unité de levage (4), qui présente plusieurs positions de levage associées respectivement aux sections de stockage (3) et grâce auxquelles une marchandise (5, 6) peut aller et venir entre les sections de stockage (3).

2. Véhicule de transport guidé sur voie (1) selon la revendication 1, **caractérisé en ce que** les moyens de chargement et de déchargement (8) présentent respectivement un moyen de convoyage transversal (3) avec lequel les marchandises (5, 6) peuvent être déplacées de manière transversale par rapport à la direction de transport (T).

3. Véhicule de transport guidé sur voie (1) selon la revendication 1 ou 2,
**caractérisé en ce que** l'unité de levage (4) présente un moyen de chargement et de déchargement (8).

4. Véhicule de transport guidé sur voie (1) selon l'une quelconque des revendications précédentes,
**caractérisé par** un moyen de transfert (22), qui est agencé en dessous de l'unité de levage (4).

5. Véhicule de transport guidé sur voie (1) selon l'une quelconque des revendications précédentes,
**caractérisé en ce que** le véhicule de transport (1) présente deux unités de levage (4) et deux unités de transfert (22).

6. Véhicule de transport guidé sur voie (1) selon l'une quelconque des revendications précédentes, comprenant un mécanisme d'entraînement (12) qui est relié à au moins un des moyens de chargement et de déchargement (8),
**caractérisé par**,
un couplage (13) qui est agencé entre le mécanisme d'entraînement (12) et le moyen de chargement et de déchargement (8) et grâce auquel la liaison entre mécanisme d'entraînement (12) et moyen de chargement et de déchargement (8) peut être débrayée de manière répétée.

7. Véhicule de transport guidé sur voie (1) selon l'une quelconque des revendications précédentes,
**caractérisé par**
un élément de butée (23) manoeuvrable, qui délimite, dans une position de butée, le déplacement d'une marchandise (5) sur un des moyens de chargement et de déchargement (8).

8. Installation de triage (25) destinée au tri de marchandises (5, 6), comprenant une voie de transport (26) s'étendant dans une direction de transport (T),
plusieurs véhicules de transport (1) associés à une voie, qui sont agencés déplaçables au niveau de la voie de transport (26),
un moyen d'entraînement (27) destiné à l'entraînement d'au moins un véhicule de transport (1) sur la voie de transport (26),
une station de chargement (28), au niveau de laquelle les marchandises (5, 6) peuvent être chargées sur le véhicule de transport (1),
et une station de déchargement (29), au niveau de laquelle les marchandises (5, 6) peuvent être déchargées des véhicules de transport (1),
**caractérisée en ce que**
les véhicules de transport guidés sur voie (1) sont conçus selon l'une quelconque des revendications précédentes.

9. Installation de triage (25) selon la revendication 8,
**caractérisée par**
un dispositif de commande (30, 31), qui commande le remplissage des véhicules de transport (1) en marchandises (5, 6) et qui agence la première marchandise (5, 6) à décharger de chaque véhicule de transport (1) sur le moyen de transfert (22) ou sur l'unité de levage (6).
